# FASCICULE DE BREVET EUROPEEN

(11) **EP 3 011 622 B1**
(45) Date de publication et mention de la délivrance du brevet: **02.08.2017**
(21) Numéro de dépôt: 14750527.5
(22) Date de dépôt: 16.06.2014
(51) Int. Cl.: H01M 4/38, H01M 4/58, H01M 4/136, H01M 4/134, C01G 49/00, C01G 51/00, C01G 53/00, C22C 13/00, C01G 30/00, H01M 10/054, C01B 25/08

(54) **UTILISATION DE NOUVEAUX COMPOSES A TITRE DE MATIERE ACTIVE D'ELECTRODE NEGATIVE DANS UNE BATTERIE SODIUM ION**
VERWENDUNG NEUARTIGER VERBINDUNGEN ALS EIN AKTIVES NEGATIVELEKTRODENMATERIAL IN EINER NATRIUM-IONEN-BATTERIE
USE OF NOVEL COMPOUNDS AS AN ACTIVE NEGATIVE ELECTRODE MATERIAL IN A SODIUM-ION BATTERY

(30) Priorité: 17.06.2013 FR 1355641
(43) Date de publication de la demande: 27.04.2016
(73) Titulaire: Centre National de la Recherche Scientifique (C.N.R.S.), 75016 Paris (FR); Université Montpellier 2, Sciences et Techniques, 34095 Montpellier Cedex 5 (FR)
(72) Inventeur: MONCONDUIT, Laure, 34830 Jacou (FR); DARWICHE, Ali, 34000 Montpellier (FR); FULLENWARTH, Julien, 34920 Le Cres (FR); STIEVANO, Lorenzo, 34150 Montpeyroux (FR); SOUGRATI, Moulay Tahar, 34090 Montpellier (FR)
(74) Mandataire: Goulard, Sophie
(86) Numéro de dépôt international: PCT/FR2014/051480
(87) Numéro de publication internationale: WO 2014/202887

(56) Documents cités:
- CN-A- 101 662 017
- CN-A- 102 544 462
- JP-A- 2007 123 236
- JP-A- 2013 054 987
- JP-A- 2013 084 522
- US-A1- 2008 026 289
- XIE J ET AL: "Solvothermal synthesis and electrochemical performances of nanosized CoSb3 as anode materials for Li-ion batteries", JOURNAL OF POWER SOURCES, ELSEVIER SA, CH, vol. 140, no. 2, 2 février 2005 (2005-02-02), pages 350-354, XP004714231, ISSN: 0378-7753, DOI: 10.1016/J.JPOWSOUR.2004.08.027
- Y. LU ET AL: "Growth of nickel phosphide films as anodes for lithium-ion batteries: Based on a novel method for synthesis of nickel films using ionic liquids", ELECTROCHIMICA ACTA, vol. 112, 1 décembre 2013 (2013-12-01), pages 212-220, XP055104587, ISSN: 0013-4686, DOI: 10.1016/j.electacta.2013.09.035
- DARWICHE ALI ET AL: "Facile synthesis and long cycle life of SnSb as negative electrode material for Na-ion batteries", ELECTROCHEMISTRY COMMUNICATIONS, vol. 32, 28 mars 2013 (2013-03-28), pages 18-21, XP028531632, ISSN: 1388-2481, DOI: 10.1016/J.ELECOM.2013.03.029
- HAYASHI A ET AL: "Electrochemical performance of NiP2 negative electrodes in all-solid-state lithium secondary batteries", JOURNAL OF POWER SOURCES, ELSEVIER SA, CH, vol. 189, no. 1, 1 avril 2009 (2009-04-01) , pages 669-671, XP025982773, ISSN: 0378-7753, DOI: 10.1016/J.JPOWSOUR.2008.09.047 [extrait le 2008-09-24]

## Description

La présente invention concerne l'utilisation de nouveaux composés précurseurs d'alliage(s) de sodium, à titre de matière active d'électrode négative dans une batterie sodium-ion ainsi qu'une électrode négative comprenant un tel composé précurseur d'alliage(s) de sodium, et une batterie sodium-ion comportant une telle électrode négative.

### ARRIERE-PLAN TECHNOLOGIQUE

Les batteries au lithium sont devenues des constituants indispensables dans la plupart des dispositifs électroniques portables et elles sont largement étudiées pour une utilisation dans les véhicules électriques ainsi que dans le domaine du stockage d'énergie. Cependant, leur avenir risque d'être compromis, du fait d'une part, que la ressource en lithium est limitée et d'autre part, que le coût des matières premières à base de lithium a presque doublé depuis leur première utilisation en 1991 jusqu'à aujourd'hui, et augmente encore en raison de la demande globale croissante en accumulateurs lithium-ion. Ainsi, bien que des batteries au lithium recyclables commencent à être proposées, les batteries sodium-ion pourraient constituer une solution alternative de choix et remplacer les batteries au lithium, notamment grâce à la plus grande disponibilité des précurseurs du sodium dans la nature (croûte terrestre, eau de mer, etc...) et leur faible coût.

Les batteries au sodium ont généralement une cathode dans laquelle la matière active est un composé capable d'insérer des ions sodium de manière réversible, un électrolyte comprenant un sel de sodium facilement dissociable, et une anode dont la matière active est une feuille de sodium Na⁰ ou d'un alliage de sodium, ou un composé capable d'insérer des ions sodium de manière réversible à un potentiel inférieur à celui de la matière active de la cathode.

Les divers constituants d'une batterie au sodium sont choisis de manière à produire au coût le plus faible possible, des batteries qui ont une densité d'énergie élevée, une bonne stabilité au cyclage et qui fonctionnent avec sécurité.

Il est connu d'utiliser le sodium dans des batteries Na/S qui fonctionnent à température élevée pour du stockage de l'ordre du mégawatt. On connaît également les systèmes Na/NiCl₂ pour les véhicules électriques. Mais ces deux types de batteries (batteries ZEBRA®) ne fonctionnent que dans un domaine de températures élevées (de l'ordre de 270-300°C), où elles bénéficient de la conductivité élevée des céramiques β-alumine.

Bien que la plupart des recherches menées récemment se soient focalisées sur la conception d'électrodes positives pour des batteries sodium-ion, des électrodes négatives à base de matériaux carbonés autres que le graphite ont également été proposées. En effet, il est connu que le graphite possède de faibles propriétés d'insertion du sodium, notamment en raison du fait que le sodium présente un rayon ionique environ 55% supérieur à celui du lithium, rendant difficile son intercalation dans certains matériaux d'anode. Ainsi, Komaba et al. [Adv. Funct. Mater., 2011, 21, 20, 3859-3867] ont proposé l'utilisation du carbone « dur » (carbone contenant majoritairement des atomes de carbone sp²) comme matière active d'anode dans une batterie sodium-ion. L'absorption des ions sodium sur les surfaces des nanopores du carbone « dur » facilite leur insertion et permet d'obtenir des capacités spécifiques de l'ordre de 250 mAh/g. Cependant, le principal inconvénient des carbones « durs » est la consommation d'une partie du courant, et donc des ions sodium provenant de l'électrode positive lors de la première charge, avec pour résultat la formation, sur l'électrode négative, d'une couche protectrice, dite de passivation, qui prévient une réaction ultérieure de l'électrolyte sur l'électrode négative dans laquelle vient s'insérer le sodium. Ce phénomène provoque une diminution de la densité d'énergie de la batterie et une perte de la capacité initiale de 15 à 25 % au premier cycle.

Très récemment, Darwiche et al. [J. Am. Chem. Soc., 2012, 134, 20805-20811] ont montré que de l'antimoine pur Sb de taille micrométrique peut également être utilisé en tant que matière active d'anode dans une batterie sodium-ion pour atteindre de bonnes performances électrochimiques, voire supérieures à celles obtenues dans une batterie lithium-ion. En effet, la capacité spécifique initiale dans une batterie sodium-ion est de 600 mAh/g et elle est maintenue sur 160 cycles, alors que dans une batterie lithium-ion, la capacité spécifique initiale est d'environ 640 mAh/g et elle diminue fortement après 15 cycles. Cependant, l'antimoine présente les inconvénients d'être d'une part, un élément très toxique et d'autre part, une ressource non renouvelable amenée à disparaître du fait de l'exploitation humaine intensive. En effet, l'épuisement de l'antimoine devrait être définitif dès 2022.

Darwiche et al. [Electrochem. Comm., 2013, 32, 18-21] ont également décrit que l'utilisation de SnSb comme matière active d'anode dans une batterie sodium-ion permet d'atteindre de bonnes performances électrochimiques en termes de capacité spécifique et de stabilité au cyclage (capacité spécifique de 525 mAh/g maintenue sur 125 cycles). Cependant, l'antimoine présente les inconvénients précités et l'étain est, comme l'antimoine, une ressource non renouvelable amenée à disparaître du fait de l'exploitation humaine intensive. En effet, l'épuisement de l'étain devrait être définitif vers 2028. JP2013084522 décrit une électrode négative d'une batterie secondaire au sodium comprenant un mélange d'étain avec un métal pouvant être Fe, Co, Ni, Cu, Ge, In, Pb, Sb, In, ou Bi.

JP2013054987 décrit un composé précurseur d'un alliage de sodium comprenant de l'étain ou du germanium employé dans une batterie sodium-ion.

### LA PRESENTE INVENTION

Le but de la présente invention est de pallier tout ou en partie les inconvénients précités en proposant l'utilisation de nouveaux composés précurseurs d'alliages de sodium, comme matière active d'anode dans une batterie au sodium et conduisant à de bonnes performances électrochimiques dans des conditions de sécurité. En particulier, la présente invention a pour but d'utiliser dans une batterie sodium-ion de nouveaux composés précurseurs d'alliages de sodium moins toxiques pour l'environnement que ceux de l'art antérieur, potentiellement recyclables et qui comprennent des quantités diminuées en éléments amenés à disparaître pendant la prochaine décennie.

A cet effet, la présente invention a pour objet l'utilisation d'un nouveau composé précurseur d'alliage(s) de sodium, répondant à la formule suivante :

MₙE1ₓE2 (I)

dans laquelle :
- M est un métal de transition choisi parmi Co, Ni, Cu et Fe ;
- E1 et E2 sont des éléments choisis parmi In, Bi, Ge, Sn, Sb et P ;
- les valeurs de n et x sont telles que le composé de formule (I) est électroniquement neutre ;
avec les conditions suivantes :
- lorsque n = 0 et x ≠ 0, alors E1 et E2 sont différents l'un de l'autre et sont choisis parmi In, Bi, Ge, Sn, Sb et P, avec x tel que 0,1 ≤ x ≤ 2, de préférence 0,1 ≤ x ≤ 0,5, et de préférence encore 0,2 ≤ x ≤ 0,5 ; étant entendu que lorsque x = 1 et E1 (respectivement E2) est Sn, alors E2 (respectivement E1) est différent de Sb ;
- lorsque n ≠ 0, alors x = 0, et E2 est choisi parmi In, Bi, Ge, Sn, Sb et P, avec n tel que 0,1 ≤ n ≤ 3, de préférence 0,1 ≤ n ≤ 0,5, et de préférence encore 0,2 ≤ n ≤ 0,5 ; étant entendu que lorsque n = 2 et M est Cu, alors E2 est différent de Sb, et lorsque n = 6/5 et M est Cu, alors E2 est différent de Sn.
à titre de matière active d'électrode négative dans une batterie sodium-ion.

Dans la présente invention, lorsque n = 0 et x ≠ 0, ou lorsque n ≠ 0 et x = 0, le composé répondant à la formule E1ₓE2 ou MₙE2 est sous forme d'alliage, c'est-à-dire qu'il constitue un composé en tant que tel et non un simple mélange de E1 et E2, ou de M et E2.

Dans un mode de réalisation préféré de l'invention, M est choisi parmi Co, Ni et Fe.

La demanderesse a découvert que ces composés de formule (I), précurseurs d'alliage(s) de sodium, peuvent être utilisés comme matière active d'anode dans une batterie sodium-ion et conduisent à d'excellentes performances électrochimiques, en termes de capacité spécifique initale, stabilité au cyclage et efficacité coulombique, lesdites performances étant équivalentes, voire meilleures que celles obtenues en utilisant les mêmes composés de formule (I) comme matière active d'anode dans une batterie lithium-ion. Ce résultat est surprenant compte tenu du fait que l'atome de sodium étant bien plus gros que l'atome de lithium, on peut s'attendre à ce que son insertion dans la matière active génère une expansion volumique bien plus importante pendant le cyclage, c'est-à-dire lors de la formation de l'alliage le plus sodaté, que celle qui est engendrée par l'insertion du lithium, et de ce fait, conduise à une détérioration des performances électrochimiques. Contre toute attente, il s'est pourtant avéré que le passage de chacun des composés de formule (I) utilisés selon l'invention, à l'alliage le plus sodaté lors du cyclage, induit une expansion volumique très importante, de l'ordre de 400 à 550% environ, et que les propriétés électrochimiques n'en sont pas, pour autant, affectées ; alors que ce phénomène d'expansion volumique qui est également observé avec des électrodes de silicium soumises à des cycles de charge et de décharge vis-à-vis des ions lithium, conduit à une réduction substantielle des performances électrochimiques de la batterie.

Par ailleurs, l'utilisation de ces composés de formule (I) dans une batterie sodium-ion plutôt que dans une batterie lithium-ion permet d'éviter en tout ou partie la dégradation de l'électrolyte à la surface de l'électrode, notamment de par le fait que le potentiel du couple Na⁺/Na est plus élevé que le potentiel du couple Li⁺/Li.

De plus, la présence dans les composés de formules (I) d'un métal de transition M ou d'un élément E1 lorsque l'élément E2 est de l'antimoine ou de l'étain, permet de diminuer les quantités desdits antimoine et étain utilisées dans lesdits composés de formule (I).

Enfin, les composés de formule (I) comprenant un métal de transition M présentent une meilleure conduction électronique, notamment lors de la charge de la batterie.

Lorsque le composé de formule (I) comprend un métal de transition M et un élément E2 ou comprend les deux éléments E1 et E2 mais pas de métal M, ledit composé peut être obtenu selon des méthodes bien connues de l'homme du métier par réaction de M et E2 ou de E1 et E2 sous forme de poudres soit dans un broyeur (mécanosynthèse), soit dans un tube scellé sous vide à haute température. Ainsi que cela est détaillé dans les exemples ci-après qui illustrent l'invention, ces synthèses requièrent toutefois des conditions de réaction adaptées pour pouvoir former le composé de formule (I) en tant que tel, c'est-à-dire le composé de formule MₙE2 ou E1ₓE2 sous forme d'alliage.

Ainsi, un procédé tel que celui décrit dans CN 102544462 comprenant une étape de mélange d'une poudre d'étain ou d'antimoine, et d'une poudre de fer ; et une étape de broyage pendant quelques heures ne permet pas de conduire à un alliage de type FeₙSn ou FeₙSb, avec 0,1 ≤ n ≤ 3. En effet, soit le mélange de la première étape comprend en outre un agent carboné (e.g. noir d'acétylène), empêchant la formation dudit alliage de type FeₙSb ou FeₙSb lors de l'étape de broyage ; soit la durée de broyage et/ou les temps de pause pendant le broyage sont inadaptés pour permettre aux alliages de se former notamment dans le cas de l'étain. En effet, l'étain fond à basse température (232°C), et donc avant que l'alliage puisse se former, induisant une agglomération des particules d'étain sur les parois du broyeur.

Lorsque le composé de formule (I) comprend uniquement un élément E2, ledit composé peut être utilisé directement sous forme de poudre tel que reçu des fabricants, ou peut être broyé dans un broyeur.

Selon une première variante, le composé utilisé selon l'invention répond à la formule (Ia) suivante :

MₙE1ₓP (Ia)

dans laquelle :
- M est un métal de transition choisi parmi Co, Cu, Ni et Fe ;
- E1 est un élément choisi parmi In, Bi, Ge, Sn et Sb ;
- les valeurs de n et x sont telles que le composé de formule (Ia) est électroniquement neutre ;
avec les conditions suivantes :
- lorsque n = 0 et x ≠ 0, alors x est tel que 0,1 ≤ x ≤ 1, de préférence tel que 0,1 ≤ x ≤ 0,5, et de préférence encore tel que 0,2 ≤ x ≤ 0,5 ;
- lorsque n ≠ 0 et x = 0, alors n est tel que 0,1 ≤ n ≤ 3, de préférence tel que 0,1 ≤ n ≤ 0,5, et de préférence encore tel que 0,2 ≤ n ≤ 0,5.

Le phosphore étant un élément léger, sa présence dans les composés de formule (Ia) permet de fournir des matières actives d'anodes pouvant atteindre de fortes capacités massiques dans une batterie sodium-ion.

Dans le cadre de cette première variante, on préférera avantageusement utiliser les composés choisis parmi SnP₃ (ce qui correspond à un composé de formule (Ia) avec n = 0 et x = 1/3), CuP₂ (ce qui correspond à un composé de formule (Ia) avec x = 0 et n = 1/2), CoP₃ (ce qui correspond à un composé de formule (Ia) avec x = 0 et n = 1/3), et NiP₃ (ce qui correspond à un composé de formule (Ia) avec x = 0 et n = 1/3).

Dans un mode de réalisation préféré, M est choisi parmi Co, Ni et Fe.

Selon une deuxième variante, le composé utilisé selon l'invention répond à la formule (Ib) suivante :

MₙE1ₓSb (Ib)

dans laquelle :
- M est un métal de transition choisi parmi Co, Cu, Ni et Fe ;
- E1 est un élément choisi parmi In, Bi, Ge, Sn et P ;
- les valeurs de n et x sont telles que le composé de formule (Ib) est électroniquement neutre ;
avec les conditions suivantes :
- lorsque n = 0 et x ≠ 0, alors x est tel que 0,1 ≤ x ≤ 1, de préférence tel que 0,1 ≤ x ≤ 0,5, et de préférence encore tel que 0,2 ≤ x ≤ 0,5 ;
- lorsque n ≠ 0 et x = 0, alors n est tel que 0,1 ≤ n ≤ 3, de préférence tel que 0,1 ≤ n ≤ 0,5, et de préférence encore tel que 0,2 ≤ n ≤ 0,5.

Les antimonures de formule (Ib) utilisés selon l'invention présentent des quantités diminuées en antimoine grâce à la présence du métal de transition M ou de l'élément E1. Ils présentent donc une toxicité réduite par comparaison avec de l'antimoine pur. Par ailleurs, lesdits antimonures de formule (Ib) sont très denses (densités comprises entre 6 et 8) et permettent ainsi d'atteindre de fortes capacités volumiques dans une batterie sodium-ion.

Dans un mode de réalisation préféré, M est choisi parmi Co, Ni et Fe.

Dans le cadre de cette deuxième variante, on préférera avantageusement utiliser les composés choisis parmi CoSb₃ (ce qui correspond à un composé de formule (Ib) avec n = 1/3 et x = 0), NiSb₂ (ce qui correspond à un composé de formule (Ib) avec n = 1/2 et x = 0) et FeSb₂ (ce qui correspond à un composé de formule (Ib) avec n = 1/2 et x = 0).

Dans un mode de réalisation particulier de cette deuxième variante, le composé utilisé selon l'invention à titre de matière active d'électrode négative dans une batterie sodium-ion répond à la formule (Ib-1) suivante :

BiₓSb (Ib-1)

dans laquelle :
- la valeur de x est telle que le composé de formule (Ib-1) est électroniquement neutre ;
- x est tel que 0,1 ≤ x < 1 et de manière encore plus préférée, x est tel que 0,2 < x < 0,4.

Les composés de formule (Ib-1) utilisés selon l'invention présentent des quantités diminuées en antimoine grâce à la présence du bismuth.

Selon une troisième variante, le composé utilisé selon l'invention à titre de matière active dans une batterie sodium-ion est SnGe.

L'invention a également pour objet une électrode négative pour une batterie sodium-ion comprenant :
(i) 45 à 75% environ d'une matière active répondant à la formule suivante :

   MₙE1ₓE2 (I)

   dans laquelle :
   - M est un métal de transition choisi parmi Co, Cu, Ni et Fe ;
   - E1 et E2 sont des éléments choisis parmi In, Bi, Ge, Sn, Sb et P ;
   - les valeurs de n et x sont telles que le composé de formule (I) est électroniquement neutre ;
   avec les conditions suivantes :
   - lorsque n = 0 et x ≠ 0, alors E1 et E2 sont différents l'un de l'autre et sont choisis parmi In, Bi, Ge, Sn, Sb et P, avec x tel que 0,1 ≤ x ≤ 2, de préférence 0,1 ≤ x ≤ 0,5, et de préférence encore tel que 0,2 ≤ x ≤ 0,5 ; étant entendu que lorsque x = 1 et E1 (respectivement E2) est Sn, alors E2 (respectivement E1) est différent de Sb ;
   - lorsque n ≠ 0, alors x = 0, et E2 est choisi parmi In, Bi, Ge, Sn, Sb et P, avec n tel que 0,1 ≤ n ≤ 3, de préférence 0,1 ≤ n ≤ 0,5, et de préférence encore tel que 0,2 ≤ n ≤ 0,5 ; étant entendu que lorsque n = 2 et M est Cu, alors E2 est différent de Sb, et lorsque n = 6/5 et M est Cu, alors E2 est différent de Sn.
(ii) 0 à 30% environ d'un liant et
(iii) 0 à 30% environ d'un agent conférant une conductivité électronique,
les pourcentages étant exprimés en masse par rapport à la masse totale de l'électrode.

Dans un mode de réalisation préféré, M est choisi parmi Co, Ni et Fe.

Dans un mode de réalisation particulier, l'électrode négative selon l'invention comprend :
(i) 55 à 75% environ de matière active répondant à la formule (I) telle que définie ci-dessus,
(ii) 10 à 25% environ d'un liant,
(iii) 15 à 25% environ d'un agent conférant une conductivité électronique.

Selon ce mode de réalisation particulier, la matière active peut répondre à la formule (Ia), (Ib), ou (Ib-1), lesdites formules (Ia), (Ib) et (Ib-1) étant telles que définies dans la présente invention.

Dans un mode de réalisation particulier, l'électrode négative selon l'invention comprend :
(i) 60 à 67% environ d'une matière active répondant à la formule suivante :

   MₙE1ₓP (Ia)

   dans laquelle :
   - M est un métal de transition choisi parmi Co, Cu, Ni et Fe ;
   - E1 est un élément choisi parmi In, Bi, Ge, Sn et Sb ;
   - les valeurs de n et x sont telles que le composé de formule (Ia) est électroniquement neutre ;
   avec les conditions suivantes :
   - lorsque n = 0 et x ≠ 0, alors x est tel que 0,1 ≤ x ≤ 1, de préférence tel que 0,1 ≤ x ≤ 0,5, et de préférence encore tel que 0,2 ≤ x ≤ 0,5 ;
   - lorsque n ≠ 0 et x = 0, alors n est tel que 0,1 ≤ n ≤ 3, de préférence tel que 0,1 ≤ n ≤ 0,5, et de préférence encore tel que 0,2 ≤ n ≤ 0,5.
(ii) 12 à 20 % environ d'un liant,
(iii) 18 à 25% environ d'un agent conférant une conductivité électronique.

Dans un mode de réalisation préféré de l'invention, M est choisi parmi Co, Ni et Fe.

Les liants utilisables selon l'invention sont de préférence choisis parmi la carboxyméthylcellulose (CMC), le polyfluorure de vinylidène (PVDF), le copolymère de styrène et butadiène (SBR) et leurs mélanges. Parmi ces liants, la CMC et le PVDF sont particulièrement préférés.

Les agents conférant une conductivité électronique utilisables selon l'invention sont de préférence choisis parmi le noir de carbone, les fibres de carbone à croissance en phase vapeur (VGCF-S pour « *vapor ground carbon fibers* » en anglais), les nanotubes de carbone, le carbone SP et leurs mélanges. Parmi lesdits agents, le noir de carbone et les fibres de carbone à croissance en phase vapeur sont particulièrement préférés.

Dans un mode de réalisation particulièrement avantageux de l'invention, l'électrode négative comprend une quantité surfacique de matière active allant de 1,5 mg/cm² à 5 mg/cm² environ.

De préférence, l'électrode négative de l'invention présente une épaisseur allant de 10 à 150 µm environ.

L'invention a également pour objet une batterie sodium-ion comprenant au moins une électrode négative en contact avec un collecteur de courant, au moins une électrode positive en contact avec un collecteur de courant, lesdites électrodes négative et positive étant séparées l'une de l'autre par un électrolyte, ladite batterie étant caractérisée en ce que l'électrode négative est telle que définie précédemment.

L'électrode positive d'une batterie selon l'invention comprend une matière active, éventuellement un agent conférant une conductivité électronique et éventuellement un liant, ladite électrode positive étant capable d'insérer réversiblement des ions Na⁺ à un potentiel supérieur au potentiel de fonctionnement de l'électrode négative. A titre d'exemple de matière active, on peut citer :
- les fluorophosphates lamellaires Na₂TPO₄F dans lesquels T représente un élément divalent choisi parmi Fe, Mn, Co, et Ni, qui peuvent être remplacés partiellement par Mg ou Zn,
- des fluorophosphates différents des fluorophosphates précités, lesdits fluorophosphates étant choisis parmi Na₃V₂(PO₄)₂F₃, Na₃V₂(PO₄)₃ et NaVPO₄F ;
- les fluorosulfates NaT'SO₄F dans lesquels T' représente au moins un élément choisi parmi Fe, Mn, Co, V et Ni, dont une partie peut être remplacée par Mg et une partie des groupements sulfates SO₄²⁻ peut être remplacée par le groupement iso-stère et iso-charge PO₃F²⁻ ;
- les polysulfures Na₂Sₙ (1≤n≤6), et les sels de sodium du dimercaptothiadiazole et du dimercaptooxazole ;
- les dithiocarbamates Na[CS₂NR'R"] dans lesquels chacun des groupes R' et R" représente un radical méthyle, éthyle, ou propyle, ou bien R' et R" formant un cycle (par exemple la pyrolidine ou la morpholine).

Le collecteur de courant de l'électrode positive et le collecteur de courant de l'électrode négative conforme à l'invention sont constitués par un matériau conducteur.

Dans un mode de réalisation particulier, le matériau conducteur du collecteur de courant de l'électrode négative selon l'invention et le matériau conducteur du collecteur de courant de l'électrode positive sont des matériaux métalliques qui peuvent être choisis indépendemment l'un de l'autre, par exemple parmi l'aluminium, le cuivre, un acier, et le fer.

Dans un mode de réalisation particulier, le collecteur de courant de l'électrode négative selon l'invention et le collecteur de courant de l'électrode positive présentent une épaisseur allant de 15 à 30 µm environ.

L'électrolyte de la batterie est une solution d'un sel de sodium dans un solvant.

Le sel de sodium est de préférence choisi parmi les sels de sodium d'acides forts, tels que par exemple NaClO₄, NaBF₄, NaPF₆, Na₂SO₄, NaNO₃, Na₃PO₄, Na₂CO₃ et les sels de sodium ayant un anion perfluoroalcanesulfonate, bis-(perfluoroalkylsulfonyl) imides tels que le sodium bis(trifluorométhanesulfonyl)imide (NaTFSI), bis(perfluoroalkylsulfonyl) méthane ou tris(perfluoroalkylsulfonyl)méthane. Parmi de tels sels, NaClO₄, NaPF₆ et NaTFSI sont particulièrement préférés.

Le solvant peut être un solvant liquide, éventuellement gélifié par un polymère, ou un solvant polymère polaire éventuellement plastifié par un liquide.

Le solvant liquide est de préférence un solvant organique liquide aprotique polaire choisi par exemple parmi les éthers linéaires et les éthers cycliques, les esters, les nitriles, les dérivés nitrés, les amides, les sulfones, les sulfolanes, les alkylsulfamides et les hydrocarbures partiellement hydrogénés. Les solvants particulièrement préférés sont le diéthyléther, le diméthoxyéthane, le glyme, le tétrahydrofurane, le dioxane, le diméthyltétrahydrofurane, le formiate de méthyle ou d'éthyle, le carbonate de propylène, d'éthylène, de vinylène ou de fluoroéthylène, les carbonates d'alkyle (notamment le carbonate de diméthyle, le carbonate de diéthyle et le carbonate de méthylpropyle), les butyrolactones, l'acéto-nitrile, le benzonitrile, le nitrométhane, le nitrobenzène, la diméthylformamide, la diéthylformamide, la N-méthylpyrrolidone, la diméthylsulfone, la tétraméthylène sulfone, la tétraméthylène sulfone et les tétraalkylsulfonamides ayant de 5 à 10 atomes de carbone.

Le solvant polymère polaire peut être choisi parmi les polymères solvatants, réticulés ou non, portant ou non des groupes ioniques greffés. Un polymère solvatant est un polymère qui comporte des unités solvatantes contenant au moins un hétéroatome choisi parmi le soufre, l'oxygène, l'azote et le fluor. A titre d'exemple de polymères solvatants, on peut citer les polyéthers de structure linéaire, peigne ou à blocs, formant ou non un réseau, à base de poly(oxyde d'éthylène), ou les copolymères contenant le motif oxyde d'éthylène ou oxyde de propylène ou allylglycidyléther, les polyphosphazènes, les réseaux réticulés à base de polyéthylène glycol réticulé par des isocyanates ou les réseaux obtenus par polycondensation et portant des groupements qui permettent l'incorporation de groupements réticulables. On peut également citer les copolymères à blocs dans lesquels certains blocs portent des fonctions qui ont des propriétés rédox. Bien entendu, la liste ci-dessus n'est pas limitative, et tous les polymères présentant des propriétés solvatantes peuvent être utilisés.

Le solvant de l'électrolyte peut comprendre simultanément un solvant liquide aprotique choisi parmi les solvants liquides aprotiques cités ci-dessus et un solvant polymère polaire comprenant des unités contenant au moins un hétéroatome choisi parmi le soufre, l'azote, l'oxygène et le fluor. A titre d'exemple d'un tel polymère polaire, on peut citer les polymères qui contiennent principalement de unités dérivées de l'acrylonitrile, du fluorure de vinylidène, de la N-vinylpyrrolidone ou du méthacrylate de méthyle. La proportion de liquide aprotique dans le solvant peut varier de 2% (correspondant à un solvant plastifié) à 98% environ (correspondant à un solvant gélifié).

Dans un mode de réalisation particulier, chacune des électrodes d'une batterie selon l'invention est constituée par un film mince, ledit film mince étant de préférence d'épaisseur inférieure à 100 µm environ, et de manière encore plus préférée, d'épaisseur inférieure à 50 µm environ. Lorsque l'électrolyte est un électrolyte solide polymère, il est également sous forme de film mince d'épaisseur allant de 100 à 300 µm environ. Lorsque l'électrolyte est un électrolyte liquide, ledit liquide imprègne un séparateur sous forme d'un film mince d'épaisseur allant de 100 à 300 µm environ.

Dans un mode de réalisation particulier, l'électrolyte comprend 5% en volume de carbonate de fluoroéthylène environ.

La présente invention est illustrée par les exemples suivants, auxquels elle n'est cependant pas limitée.

### EXEMPLES

Les matières premières utilisées dans les exemples, sont listées ci-après :
- Poudre d'étain Sn, Aldrich, taille des particules de 10 µm, pureté > 99%,
- Poudre d'antimoine Sb, Alfa-Aesar, pureté de 99,5%, ∼ 325 mesh,
- Poudre de cobalt Co, Aldrich, pureté > 99,99%, ∼ 100 mesh,
- Poudre de nickel Ni, Acros Organics, pureté de 99,9%, ∼ 325 mesh,
- Poudre de Fer, Alfa-Aesar, pureté de 99%, ∼ 200 mesh,
- Poudre d'Indium In, Aldrich, pureté de 99,99%,
- Poudre de phosphore rouge, Aldrich, pureté de 99%,
- Poudre de bismuth, Fluka, pureté de 99,9%,
- Poudre de cuivre Cu, Alpha Aesar, pureté de 99.9%, 100-325 mesh
- Carboxyméthylcellulose (CMC) de masse moléculaire moyenne en poids de 250000 g.mol⁻¹ et de degré de substitution de 0,7,
- Carbonate d'éthylène (EC), carbonate de fluoroéthylène (FEC), carbonate de vinylidène (VC), Carbonate de propylène (PC) et Carbonate de diméthyle (DMC), qualité batterie (« *grade battery* »)*,*
- Perchlorate de sodium NaClO₄, Aldrich, pureté de 98%,
- Noir de carbone (NC), Y50A, surface (méthode B.E.T) = 66 m²/g,
- Fibres de carbone à croissance en phase vapeur (VGCF-S), Showa Dewko, surface (méthode B.E.T) = 35 m²/g, diamètre des fibres de 100 nm,
Tous les matériaux ont été utilisés tels que reçus des fabricants.

### Exemple 1

### Préparation des matières actives d'électrode négative de formule (I) utilisées selon l'invention

Lorsque la matière active de l'invention comprend uniquement l'élément E2 (x = 0 et n = 0), elle a été préparée par broyage rapide de l'élement E2 tel que reçu des fabricants.

Lorsque la matière active de l'invention comprend un mélange de poudres d'un métal de transition M et d'un élément E2 (M/E2) ou un mélange de poudres d'un élément E1 et d'un élement E2 (E1/E2), elle a été préparée soit par broyage dudit mélange de poudres (mécanosynthèse), soit par traitement sous vide et à haute température dans une tube scellé dudit mélange de poudres (synthèse haute température).

### 1.1 Préparation des matières actives d'électrode négative par broyage

Lorsque la préparation des matières actives a été réalisée par broyage, ledit broyage a été effectué dans un broyeur planétaire à billes vendu sous la dénomination commerciale Retsch PM 100 comprenant 6 billes en Inox de 3 grammes et de 1 cm de diamètre chacune. Ce broyeur fonctionne par un mouvement centrifuge des billes, avec une vitesse pouvant aller jusqu'à 600 tours/min.

Sous l'effet des forces centrifuges générées par la rotation, les billes se mettent en mouvement et viennent écraser les poudres à broyer contre la paroi intérieure de la jarre (qui a un volume de 50 cm³). Le broyage est alors essentiellement effectué par pression et frottement. L'association des forces de choc et des forces de frottement ainsi créées garantit un degré de broyage élevé et très efficace des broyeurs planétaires à billes. Par ailleurs, la durée du broyage dépend de l'énergie développée par le broyeur et de la quantité de poudre à broyer.

Une poudre de métal de transition M (respectivement une poudre d'élément E1) et une poudre d'élément E2 ont été introduits en proportions stoechiométriques dans le broyeur tel que décrit ci-dessus pour obtenir 1 à 2 grammes de poudre de matière active de formule (I).

La vitesse de broyage a été de 500 tours/min et le broyage a été effectué à température ambiante sans apport de chaleur.

Afin d'éviter une trop forte augmentation de la température, le broyage a été réalisé en plusieurs séquences, séparées par des temps de pause permettant de refroidir la jarre de broyage et les poudres qu'elle contient. Pour ce faire, une série de séquences "10 minutes de broyage" / 10 minutes de pause" a été mise en oeuvre. La durée de broyage (temps de pause inclus) pour obtenir la matière active de formule (I) allait de 2 à 72 heures en employant un rapport masse de billes / masse totale de poudre à broyer allant de 9 à 18.

Le volume occupé par le mélange de poudres à broyer était inférieur à 1/3 du volume de la jarre de broyage qui le contient.

Après le broyage tel que décrit ci-dessus, une étape de traitement thermique dans un tube scellé, sous vide, à une température allant de 400°C à 800°C, pendant 4 à 14 jours a, dans certains cas, été effectuée afin de former les composés de formule (I) en tant que tels, c'est-à-dire sous forme d'alliages.

### 1.2 Préparation des matières actives d'électrode négative par synthèse à haute température

Lorsque la préparation des matières actives utilisées selon l'invention a été réalisée par synthèse à haute température, un mélange de poudres d'un métal de transition M et d'un élément E2 (M/E2) ou un mélange de poudres d'un élément E1 et d'un élément E2 (E1/E2) a été introduit dans une tube scellé et traité sous vide, à une température allant de 400°C à 800°C pendant une durée allant de 4 à 14 jours afin de former les composés de formule (I) en tant que tels, c'est-à-dire sous forme d'alliages.

Le tableau 1 ci-dessous indique la matière active utilisée selon l'invention, les exemples comprenant seulement In ou Bi étant comparatifs, le type de préparation mis en oeuvre si besoin (broyage avec éventuellement un traitement thermique ou traitement dans un tube scellé à haute température), et les paramètres de température et de temps utilisés lors de ladite préparation.

**Tableau 1**

| **Matière active** | **Type de préparation** | **Paramètres de température et/ou de temps** |
|---|---|---|
| SnP₃ | Broyage | 60 heures |
| NiP₃ | Tube scellé | 700°C, 4 jours |
| CuP₂ | Broyage | 24 heures |
| COP₃ | Broyage | 24 heures |
| CoSb₃ | Broyage puis Tube scellé | 48 heures ; 750°C, 7 jours |
| NiSb₂ | Tube scellé | 610°C, 12 jours |
| FeSb₂ | Tube scellé | 600°C, 5 jours |
| Bi_{0,22}Sb_{0,78} (x = 0,28) | Broyage | 24 heures |
| Bi_{0,44}Sb_{0,56} (x = 0,79) | Broyage | 24 heures |
| GeSn | Broyage | 24 heures |
| In | Broyage | 2 heures |
| Bi | Broyage | 2 heures |

### Exemple 2

### Préparation d'électrodes négatives comprenant une matière active de formule (I) selon l'invention

Des électrodes comprenant une matière active de formule (I) ont été préparées comme suit :
Une suspension aqueuse comprenant de l'eau, 300 mg de matière active de formule (I) (pour CoSb₃, NiSb₂, FeSb₂, Bi_{0,22}Sb_{0,78}, Bi_{0,44}Sb_{0,56}, GeSn, In et Bi) ou 200 mg de matière active de formule (I) (pour SnP₃ et NiP₃), de la carboxyméthylcellulose (CMC), du noir de carbone (NC) et éventuellement des fibres de carbone à croissance en phase vapeur (VGCF-S) a été homogénéisée pendant 1 heure à température ambiante, dans un mélangeur planétaire vendu sous la dénomination commerciale Fritsch Pulverisette 7.

Le tableau 2 ci-dessous indique les quantités massiques de chacun des composés (en %) et le volume d'eau (en ml) utilisés pour la formulation de chacune des électrodes A1 -A8 selon l'invention, A9 et A10 ne faisant pas partie de l'invention.

**Tableau 2**

| **Electrode** | **Matière active** | | **CMC** | **NC** | **VGCF-S** | **Eau** |
|---|---|---|---|---|---|---|
| | **Type** | **%** | **%** | **%** | **%** | **ml** |
| A1 | SnP₃ | 63 | 16 | 21 | 0 | 1,2 |
| A2 | NiP₃ | 63 | 16 | 21 | 0 | 1,2 |
| A3 | CoSb₃ | 70 | 12 | 18 | 0 | 1,3 |
| A4 | NiSb₂ | 70 | 12 | 9 | 9 | 1,1 |
| A5 | FeSb₂ | 70 | 12 | 9 | 9 | 1,35 |
| A6 | Bi_{0,22}Sb_{0,78} | 70 | 12 | 9 | 9 | 1,3 |
| A7 | Bi_{0,44}Sb_{0,56} | 70 | 12 | 9 | 9 | 1,3 |
| A8 | GeSn | 70 | 12 | 9 | 9 | 1,3 |
| A9 | In | 70 | 12 | 18 | 0 | 1,3 |
| A10 | Bi | 70 | 12 | 18 | 0 | 1,3 |

Après ladite étape d'homogénéisation, quelques millilitres de la suspension aqueuse ont été appliqués selon la méthode « Doctor Blade » sur une feuille de cuivre de 20 µm d'épaisseur utilisée comme collecteur de courant, et l'ensemble obtenu a été séché à température ambiante pendant 12 heures, puis à 100°C sous vide pendant 2 heures pour obtenir un ensemble électrode négative selon l'invention + collecteur de courant, ladite électrode négative selon l'invention ayant une épaisseur de 10 à 30 µm environ. Ladite épaisseur de l'électrode négative a été mesurée par microscopie électronique à balayage avec un microscope à effet de champ détecteur d'électrons secondaires et rétrodiffusés vendu sous la dénomination Hitachi S4800.

### Exemple 3

### Performances électrochimiques des électrodes négatives comprenant une matière active de formule (I) selon l'invention

### 3.1 Mesures de la capacité spécifique

Des tests électrochimiques en demi-pile dans une cellule de type bouton, ont été réalisés pour chacune des électrodes A1 à A10 telles que préparées ci-dessus à l'exemple 2, en utilisant une feuille de sodium comme contre-électrode, et à titre d'électrolyte une solution de perchlorate de sodium (NaClO₄ 1 mol/l) dans du PC et 5% de FEC (rapport volumique PC/FEC = 95/5), un séparateur de type fibres de verre Whatman, et chacune des électrodes négatives assemblées à un collecteur de courant telles qu'obtenues à l'exemple 2 ci-dessus.

La cellule de type bouton a subi des cycles de charge (C)-décharge (D) à différents régimes C/n (n étant le nombre de moles de sodium par mole de matière active de formule (I) et par heure), entre 0,02 V et 1,5 V (0,02 V et 2V pour BiₓSb).

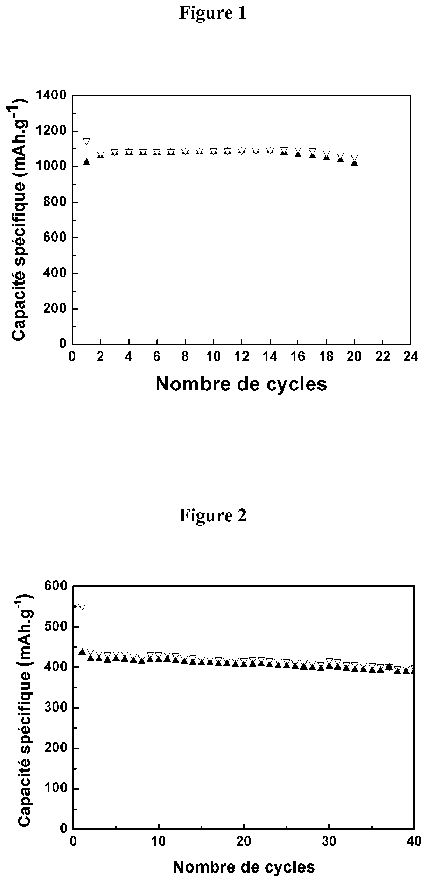

Les mesures de capacités spécifiques pour les électrodes négatives de l'invention comprenant comme matière active NiP₃, CoSb₃, FeSb₂ et Bi_{0,22}Sb_{0,78} sont reportées respectivement sur les figures 1, 2, 3 et 4 annexées, figures sur lesquelles la capacité spécifique (en mAh.g⁻¹) est fonction du nombre de cycles avec un régime de courant de C pour NiP₃, de C/2 pour CoSb₃ et FeSb₂, et de C/5 pour Bi_{0,22}Sb_{0,78}. Sur ces figures, les courbes avec les triangles pleins correspondent aux mesures effectuées pendant la charge et les courbes avec les triangles vides correspondent aux mesures effectuées pendant la décharge, le calcul étant fait par rapport à la masse de matière active d'électrode de formule (I).

D'après la figure 1, l'anode de NiP₃ présente une capacité spécifique d'environ 1050 mAh/g et est stable sur au moins 20 cycles.

D'après la figure 2, l'anode de CoSb₃ présente une capacité spécifique d'environ 440 mAh/g et est stable sur au moins 30 cycles.

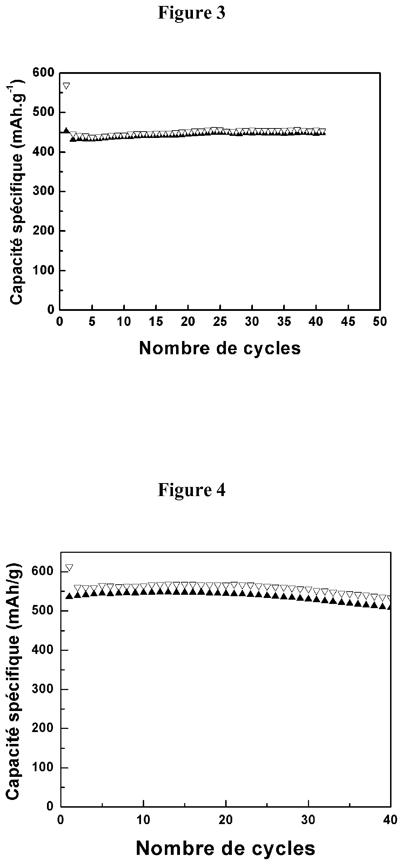

D'après la figure 3, l'anode de FeSb₂ présente une capacité spécifique d'environ 450 mAh/g et est stable sur au moins 40 cycles.

D'après la figure 4, l'anode de Bi_{0,22}Sb_{0,78} présente une capacité spécifique d'environ 550 mAh/g et est stable sur au moins 40 cycles.

Ces résultats montrent que les électrodes négatives conformes à l'invention présentent une excellente stabilité au cyclage tant à la charge qu'à la décharge.

Les mesures des capacités spécifiques réversibles (1^{er} cycle) selon le régime utilisé, des capacités volumiques réversibles (1^{er} cycle), des capacités spécifiques théoriques et des efficacités colombiques des électrodes négatives conformes à l'invention sont répertoriées dans le tableau 3 ci-dessous, les électrodes A9 et A10 ne faisant pas partie de l'invention. Les efficacités coulombiques présentées sont celles mesurées au-delà du premier cycle et tant que la capacité est stable.

**Tableau 3**

| **Electrode** | **Matière active** | **Capacité spécifique réversible 1^{er} cycle** | **Capacité spécifique théorique** | **Capacité volumique réversible 1^{er} cycle** | **Efficacité coulombique** |
|---|---|---|---|---|---|
| | | **mAh/g à C/n** | | **mAh/cm³** | **%** |
| A1 | SnP₃ | 866 à C/15 | 1140 | 3680 | 95 |
| A2 | NiP₃ | 1050 à C | 1590 | 4600 | 99 |
| A3 | CoSb₃ | 440 à C/2 | 569 | 3420 | 97 |
| A4 | NiSb₂ | 440 à C/30 | 532 | 3476 | 92 |
| A5 | FeSb₂ | 450 à C/2 | 537 | 3690 | 98 |
| A6 | Bi_{0,22}Sb_{0,78} | 550 à C/5 | 570 | 4200 | 96 |
| A7 | Bi_{0,44}Sb_{0,56} | 525 à C/5 | 502 | 3795 | 91 |
| A8 | GeSn | 500 à C/15 | 1050 | 3300 | 97 |
| A9 | In | 265 à C/10 | 350 | 1934 | 89 |
| A10 | Bi | 464 à C/10 | 385 | 4547 | 85 |

D'après les résultats obtenus ci-dessus, on peut conclure que les électrodes conformes à l'invention présentent de bonnes propriétés électrochimiques.

### 3.2 Analyse de l'insertion du sodium selon les courbes de cyclage

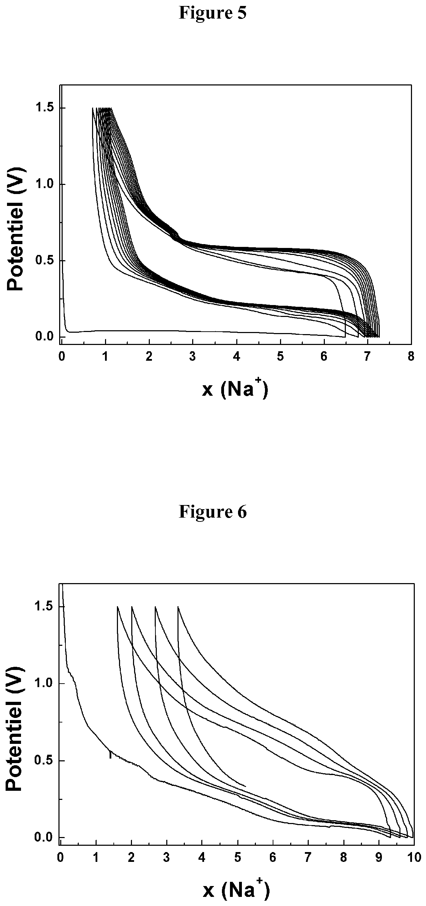

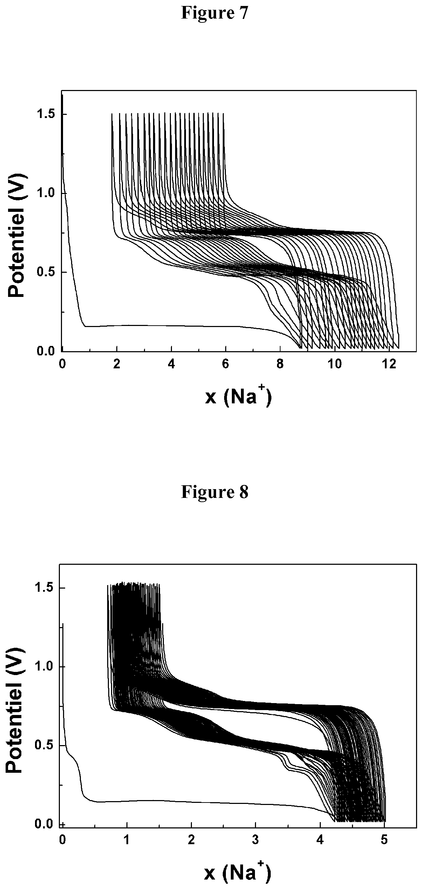

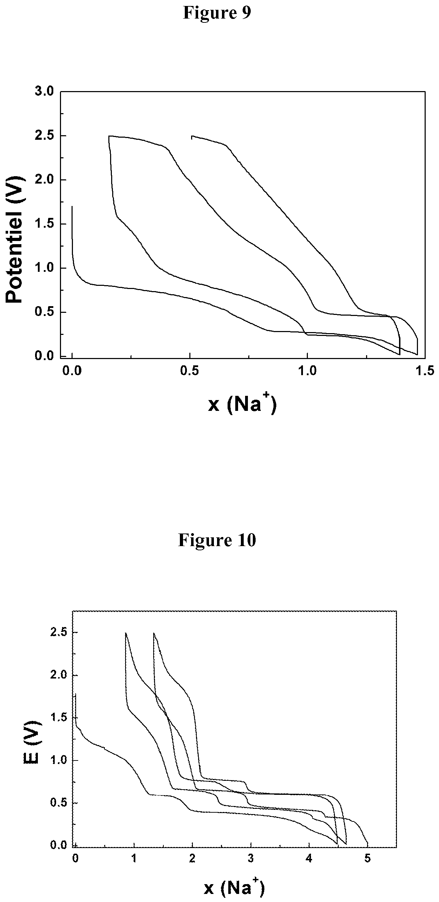

Les figures 5, 6, 7, 8, 9, 10 et 11 annexées représentent respectivement la variation de potentiel E (en Volts vs Na⁺/Na) en fonction de l'équivalent du nombre X d'ions Na⁺ insérés au cours d'au moins les deux premiers cycles charge/décharge pour les électrodes négatives de l'invention comprenant comme matière active NiP₃, SnP₃, CoSb₃, FeSb₂, In, Bi et Bi_{0,22}Sb_{0,78} avec des régimes de courant respectifs de C/10, C/15, C/2, C/2, C/10, C/10 et C/5. Le cyclage a été effectué entre 2,5 V (ou 1,5 V) et 0 V vs Na⁺/Na⁰, avec échange de l'ion Na⁺ par période de C/n (correspondant à 1 mole de Na échangée, insérée ou extraite en n heure(s)).

Les figures 5 à 11 montrent que les électrodes négatives conformes à l'invention présentent de bonnes performances électrochimiques, ce qui est surprenant compte tenu du fait que le passage de Li⁺ à Na⁺ n'est pas favorable, ni pour la diffusion ionique, ni pour la conduction électronique (puisque Li perd plus facilement son électron que Na), ni pour l'expansion volumique générée.

Ainsi, les performances des matériaux ne peuvent être simplement déduites de celles obtenues dans une batterie Li-ion puisqu'elles dépendent de nombreux paramètres tels que l'expansion volumique, les ruptures/formations de liaison ayant lieu au cours des différentes transitions de phase, les transferts de charge électronique, etc...

### Exemple 4 comparatif

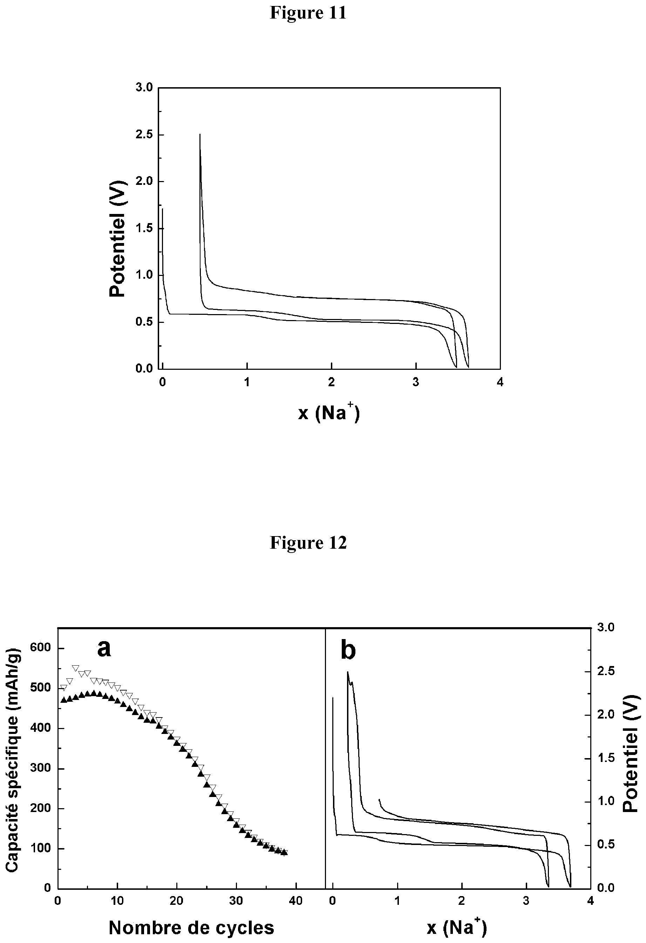

La figure 12a annexée représente la capacité spécifique (en mAh.g⁻¹) en fonction du nombre de cycles avec un régime de courant de C/5 pour une électrode préparée comme décrit dans l'exemple 1 avec une matière active BiSb (x = 1), ladite électrode n'étant donc pas conforme à l'invention. Sur cette figure, la courbe avec les triangles pleins correspond aux mesures effectuées pendant la charge et la courbe avec les triangles vides correspond aux mesures effectuées pendant la décharge, le calcul étant fait par rapport à la masse de matière active.

La figure 12b annexée représente la variation de potentiel E (en Volts vs Na⁺/Na) en fonction de l'équivalent du nombre X d'ions Na⁺ insérés au cours d'au moins les deux premiers cycles charge/décharge pour l'électrode négative non conforme à l'invention comprenant comme matière active BiSb avec un régime de courant de C/5.

Les figures 12a et 12b montrent que l'électrode négative non conforme à l'invention présente une très mauvaise stabilité au cyclage après 10 cycles.

### Exemple 5

### Préparation d'autres électrodes négatives comprenant une matière active de formule (I) selon l'invention

Des électrodes comprenant une matière active de formule (I) ont été préparées comme suit :
Une suspension aqueuse comprenant de l'eau, 300,7 mg de matière active CoP₃, ou 301,4 mg de matière active CuP₂, de la carboxyméthylcellulose (CMC), du noir de carbone (NC) et éventuellement des fibres de carbone à croissance en phase vapeur (VGCF-S) a été homogénéisée pendant 1 heure à température ambiante, dans un mélangeur planétaire vendu sous la dénomination commerciale Fritsch Pulverisette 7.

Le tableau 4 ci-dessous indique les quantités massiques de chacun des composés (en %) et le volume d'eau (en ml) utilisés pour la formulation de chacune des électrodes A11 et A12 selon l'invention.

**Tableau 4**

| **Electrode** | **Matière active** | | **CMC** | **NC** | **VGCF-S** | **Eau** |
|---|---|---|---|---|---|---|
| | **Type** | **%** | **%** | **%** | **%** | **ml** |
| A11 | COP₃ | 62,9 | 16 | 10,5 | 10,6 | 1,2 |
| A12 | CuP₂ | 70 | 12 | 18 | 0 | 0,95 |

Après ladite étape d'homogénéisation, quelques millilitres de la suspension aqueuse ont été appliqués selon la méthode « Doctor Blade » sur une feuille de cuivre de 20 µm d'épaisseur utilisée comme collecteur de courant, et l'ensemble obtenu a été séché à température ambiante pendant 12 heures, puis à 100°C sous vide pendant 2 heures pour obtenir un ensemble collecteur de courant + électrode négative selon l'invention, ladite électrode négative selon l'invention ayant une épaisseur de 10 à 30 µm environ. Ladite épaisseur de l'électrode négative a été mesurée par microscopie électronique à balayage avec un microscope à effet de champ détecteur d'électrons secondaires et rétrodiffusés vendu sous la dénomination Hitachi S4800.

### Exemple 6

### Performances électrochimiques des électrodes négatives telles que préparées dans l'exemple 5 et comprenant une matière active de formule (I) selon l'invention

### 6.1 Mesures de la capacité spécifique

Des tests électrochimiques en demi-pile dans une cellule de type bouton, ont été réalisés pour chacune des électrodes A11 et A12 telles que préparées ci-dessus à l'exemple 5, en utilisant une feuille de sodium comme contre-électrode, et à titre d'électrolyte une solution de perchlorate de sodium (NaClO₄ 1 mol/l) dans du PC et 5% de FEC (rapport volumique PC/FEC = 95/5), un séparateur de type fibres de verre Whatman, et chacune des électrodes négativesassemblées à un collecteur de courant telles qu'obtenues à l'exemple 5 ci-dessus.

La cellule de type bouton a subi des cycles de charge (C)-décharge (D) à différents régimes C/n (n étant le nombre de moles de sodium par mole de matière active de formule (I) et par heure), entre 0,02 V et 1,5 V.

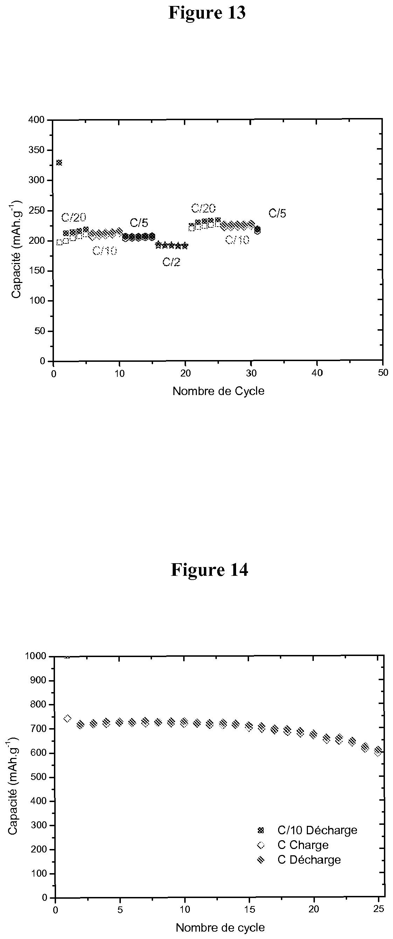

Les mesures de capacités spécifiques pour les électrodes négatives de l'invention comprenant comme matière active CoP₃ et CuP₂ sont reportées respectivement sur les figures 13 et 14 annexées, figures sur lesquelles la capacité spécifique (en mAh.g⁻¹) est fonction du nombre de cycles avec un régime de courant de C/20 (carrés), puis C/10 (losanges), puis C/5 (hexagones), puis C/2 (étoiles) pour CoP₃, et de C (losanges) pour CuP₂. Sur ces figures, les courbes avec les carrés pleins ou les losanges pleins ou les hexagones pleins ou les étoiles pleines correspondent aux mesures effectuées pendant la décharge et les courbes avec les carrés vides ou les losanges vides ou les hexagones vides ou les étoiles vides correspondent aux mesures effectuées pendant la charge, le calcul étant fait par rapport à la masse de matière active d'électrode de formule (I).

D'après la figure 13, l'anode de CoP₃ présente une capacité spécifique d'environ 210-230 mAh/g et est stable sur au moins 30 cycles.

D'après la figure 14, l'anode de CuP₂ présente une capacité spécifique d'environ 700 mAh/g et est stable sur au moins 20 cycles.

Les mesures des capacités spécifiques réversibles (1^{er} cycle) selon le régime utilisé, des capacités volumiques réversibles (1^{er} cycle), des capacités spécifiques théoriques et des efficacités colombiques des électrodes négatives conformes à l'invention sont répertoriées dans le tableau 5 ci-dessous. Les efficacités coulombiques présentées sont celles mesurées au-delà du premier cycle et tant que la capacité est stable.

**Tableau 5**

| **Electrode** | **Matière active** | **Capacité spécifique réversible 1^{er} cycle** | **Capacité spécifique théorique** | **Capacité volumique réversible 1^{er} cycle** | **Efficacité coulombique** |
|---|---|---|---|---|---|
| | | **mAh/g à C/n** | | **mAh/cm³** | **%** |
| A11 | COP₃ | 220 C/20 | 1590 | 968 | 98% |
| A12 | CuP₂ | 743.03 C | 1280 | 3195 | 99% |

D'après les résultats obtenus ci-dessus, on peut conclure que les électrodes conformes à l'invention présentent de bonnes propriétés électrochimiques.

### 6.2 Analyse de l'insertion du sodium selon les courbes de cyclage

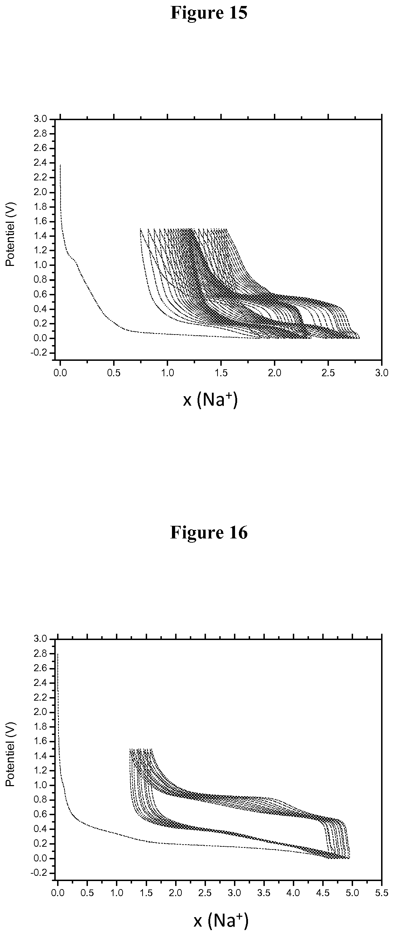

Les figures 15 et 16 annexées représentent respectivement la variation de potentiel E (en Volts vs Na⁺/Na) en fonction de l'équivalent du nombre X d'ions Na⁺ insérés au cours d'au moins les deux premiers cycles charge/décharge pour les électrodes négatives de l'invention comprenant comme matière active CoP₃ avec des régimes de courant de C/20, puis C/10, puis C/5 et puis C/2, et comme matière active CuP₂ avec des régimes de courant de C/10 puis C. Le cyclage a été effectué entre 1,5 V et 0 V vs Na⁺/Na⁰, avec échange de l'ion Na⁺ par période de C/n (correspondant à 1 mole de Na échangée, insérée ou extraite en nheure(s)).

Les figures 15 et 16 montrent que les électrodes négatives conformes à l'invention présentent de bonnes performances électrochimiques, ce qui est surprenant compte tenu du fait que le passage de Li⁺ à Na⁺ n'est pas favorable, ni pour la diffusion ionique, ni pour la conduction électronique (puisque Li perd plus facilement son électron que Na), ni pour l'expansion volumique générée.

Ainsi, les performances des matériaux ne peuvent être simplement déduites de celles obtenues dans une batterie Li-ion puisqu'elles dépendent de nombreux paramètres tels que l'expansion volumique, les ruptures/formations de liaison ayant lieu au cours des différentes transitions de phase, les transferts de charge électronique, etc...

## Revendications

1. Utilisation d'un composé précurseur d'alliage(s) de sodium, répondant à la formule suivante :
MₙE1ₓE2 (I)
dans laquelle :
- M est un métal de transition choisi parmi Co, Cu, Ni et Fe ;
- E1 et E2 sont des éléments choisis parmi In, Bi, Ge, Sn, Sb et P ;
- les valeurs de n et x sont telles que le composé de formule (I) est électroniquement neutre ;
avec les conditions suivantes :
- lorsque n = 0 et x ≠ 0, alors E1 et E2 sont différents l'un de l'autre et sont choisis parmi In, Bi, Ge, Sn, Sb et P, avec x tel que 0,1 ≤ x ≤ 2 ; étant entendu que lorsque x = 1 et E1 (respectivement E2) est Sn, alors E2 (respectivement E1) est différent de Sb ;
- lorsque n ≠ 0, alors x = 0, et E2 est choisi parmi In, Bi, Ge, Sn, Sb et P, avec n tel que 0,1 ≤ n ≤ 3 ; étant entendu que lorsque n = 2 et M est Cu, alors E2 est différent de Sb et lorsque n = 6/5 et M est Cu, alors E2 est différent de Sn ; à titre de matière active d'électrode négative dans une batterie sodium-ion.

2. Utilisation selon la revendication 1, **caractérisée en ce que** le composé précurseur d'alliage(s) de sodium répond à la formule (Ia) suivante :
MₙE1ₓP (Ia)
dans laquelle :
- M est un métal de transition choisi parmi Co, Cu, Ni et Fe ;
- E1 est un élément choisi parmi In, Bi, Ge, Sn et Sb ;
- les valeurs de n et x sont telles que le composé de formule (Ia) est électroniquement neutre ;
avec les conditions suivantes :
- lorsque n = 0 et x ≠ 0, alors x est tel que 0,1 ≤ x ≤ 1 ;
- lorsque n ≠ 0 et x = 0, alors n est tel que 0,1 ≤ n ≤ 3.

3. Utilisation selon la revendication 1, **caractérisée en ce que** le composé précurseur d'alliage(s) de sodium répond à la formule (Ib) suivante :
MₙE1ₓSb (Ib)
dans laquelle :
- M est un métal de transition choisi parmi Co, Cu, Ni et Fe ;
- E1 est un élément choisi parmi In, Bi, Ge, Sn et P ;
- les valeurs de n et x sont telles que le composé de formule (Ib) est électroniquement neutre ;
avec les conditions suivantes :
- lorsque n = 0 et x ≠ 0, alors x est tel que 0,1 ≤ x ≤ 1 ;
- lorsque n ≠ 0 et x = 0, alors n est tel que 0,1 ≤ n ≤ 3.

4. Utilisation selon la revendication 3, **caractérisée en ce que** le composé précurseur d'alliage(s) de sodium répond à la formule (Ib-1) suivante :
BiₓSb (Ib-1)
dans laquelle :
- la valeur de x est telle que le composé de formule (Ib-1) est électroniquement neutre ;
- x est tel que 0,1 ≤ x < 1.

5. Utilisation selon la revendication 1, **caractérisée en ce que** le composé précurseur d'alliage(s) de sodium est SnGe.

6. Electrode négative pour une batterie sodium-ion **caractérisée en ce qu'**elle comprend:
(i) 55 à 75% d'une matière active répondant à la formule suivante :
MₙE1ₓE2 (I)
dans laquelle :
- M est un métal de transition choisi parmi Co, Cu, Ni et Fe ;
- E1 et E2 sont des éléments choisis parmi In, Bi, Ge, Sn, Sb et P ;
- les valeurs de n et x sont telles que le composé de formule (I) est électroniquement neutre ;
avec les conditions suivantes :
- lorsque n = 0 et x ≠ 0, alors E1 et E2 sont différents l'un de l'autre et sont choisis parmi In, Bi, Ge, Sn, Sb et P, avec x tel que 0,1 ≤ x ≤ 2 ; étant entendu que lorsque x = 1 et E1 (respectivement E2) est Sn, alors E2 (respectivement E1) est différent de Sb ;
- lorsque n ≠ 0, alors x = 0, et E2 est choisi parmi In, Bi, Ge, Sn, Sb et P, avec n tel que 0,1 ≤ n ≤ 3 ; étant entendu que lorsque n = 2 et M est Cu, alors E2 est différent de Sb et lorsque n = 6/5 et M est Cu, alors E2 est différent de Sn,
(ii) 10 à 25% d'un liant,
(iii) 15 à 25% d'un agent conférant une conductivité électronique.

7. Electrode négative selon la revendication 6 **caractérisée en ce qu'**elle comprend :
(i) 60 à 67% d'une matière active répondant à la formule suivante :
MₙE1ₓP (Ia)
dans laquelle :
- M est un métal de transition choisi parmi Co, Cu, Ni et Fe ;
- E1 est un élément choisi parmi In, Bi, Ge, Sn et Sb ;
- les valeurs de n et x sont telles que le composé de formule (Ia) est électroniquement neutre ;
avec les conditions suivantes :
- lorsque n = 0 et x ≠ 0, alors x est tel que 0,1 ≤ x ≤ 1 ;
- lorsque n ≠ 0 et x = 0, alors n est tel que 0,1 ≤ n ≤ 3,
(ii) 12 à 20 % d'un liant,
(iii) 18 à 25% d'un agent conférant une conductivité électronique.

8. Electrode négative selon la revendication 6 ou 7, **caractérisée en ce que** le liant est choisi parmi la carboxyméthylcellulose (CMC), le polyfluorure de vinylidène (PVDF), le copolymère de styrène et butadiène (SBR) et leurs mélanges.

9. Electrode négative selon l'une quelconque des revendications 6 à 8, **caractérisée en ce que** l'agent conférant une conductivité électronique est choisi parmi le noir de carbone, les fibres de carbone à croissance vapeur, les nanotubes de carbone, le carbone SP et leurs mélanges.

## Patentansprüche

1. Verwendung einer Vorläuferverbindung von Natriumlegierung(en), entsprechend der folgenden Formel:
MₙE1_{X}E2 (I)
wobei:
- M ein Übergangsmetall, ausgewählt aus Co, Cu, Ni und Fe, ist,
- E1 und E2 Elemente, ausgewählt aus In, Bi, Ge, Sn, Sb und P, sind,
- die Werte von n und x derart sind, dass die Verbindung der Formel (I) elektronisch neutral ist,
mit den folgenden Bedingungen:
- wenn n = 0 und x ≠ 0, dann sind E1 und E2 voneinander unterschiedlich und sind ausgewählt aus In, Bi, Ge, Sn, Sb und P, mit x derart, dass 0,1 ≤ x ≤ 2; wobei es sich versteht, dass, wenn x = 1 und E1 (beziehungsweise E2) Sn ist, E2 (beziehungsweise E1) dann von Sb unterschiedlich ist,
- wenn n≠ 0, dann ist x = 0, und E2 ist aus In, Bi, Ge, Sn, Sb und P ausgewählt, mit n derart, dass 0,1 ≤ n ≤ 3; wobei es sich versteht, dass, wenn n = 2 und M Cu ist, E2 dann von Sb unterschiedlich ist und wenn n = 6/5 und M Cu ist, E2 dann von Sn unterschiedlich ist,
als aktives Material einer negativen Elektrode in einer Natriumionenbatterie.

2. Verwendung nach Anspruch 1, **dadurch gekennzeichnet, dass** die Vorläuferverbindung von Natriumlegierung(en) der folgenden Formel (la) entspricht:
MₙE1ₓP (Ia)
wobei:
- M ein Übergangsmetall, ausgewählt aus Co, Cu, Ni und Fe, ist,
- E1 ein Element, ausgewählt aus In, Bi, Ge, Sn und Sb, ist,
- die Werte von n und x derart sind, dass die Verbindung der Formel (Ia) elektronisch neutral ist,
mit den folgenden Bedingungen:
- wenn n = 0 und x≠ 0, dann ist x derart, dass 0,1 ≤ x ≤ 1,
- wenn n≠ 0 und x = 0, dann ist n derart, dass 0,1 ≤ n ≤ 3.

3. Verwendung nach Anspruch 1, **dadurch gekennzeichnet, dass** die Vorläuferverbindung von Natriumlegierung(en) der folgenden Formel (Ib) entspricht:
MₙE1ₓSb (Ib)
wobei:
- M ein Übergangsmetall, ausgewählt aus Co, Cu, Ni und Fe, ist,
- E1 ein Element, ausgewählt aus In, Bi, Ge, Sn und P, ist,
- die Werte von n und x derart sind, dass die Verbindung der Formel (Ib) elektronisch neutral ist,
mit den folgenden Bedingungen:
- wenn n = 0 und x≠ 0, dann ist x derart, dass 0,1 ≤ x ≤ 1,
- wenn n≠ 0 und x = 0, dann ist n derart, dass 0,1 ≤ n ≤ 3.

4. Verwendung nach Anspruch 3, **dadurch gekennzeichnet, dass** die Vorläuferverbindung von Natriumlegierung(en) der folgenden Formel (Ib-1) entspricht:
BiₓSb (Ib-1)
wobei :
- der Werte von x derart ist, dass die Verbindung der Formel (aIb-1) elektronisch neutral ist,
- x derart ist, dass 0,1 ≤ x ≤ 1.

5. Verwendung nach Anspruch 1, **dadurch gekennzeichnet, dass** die Vorläuferverbindung von Natriumlegierung(en) SnGe ist.

6. Negative Elektrode für eine Natriumionenbatterie, **dadurch gekennzeichnet, dass** sie umfasst:
(i) 55 bis 75 % eines aktiven Materials, das der folgenden Formel entspricht:
MₙE1_{X}E2 (I)
wobei:
- M ein Übergangsmetall, ausgewählt aus Co, Cu, Ni und Fe, ist,
- E1 und E2 Elemente, ausgewählt aus In, Bi, Ge, Sn, Sb und P, sind,
- die Werte von n und x derart sind, dass die Verbindung der Formel (I) elektronisch neutral ist,
mit den folgenden Bedingungen:
- wenn n = 0 und x ≠ 0, dann sind E1 und E2 voneinander unterschiedlich und sind ausgewählt aus In, Bi, Ge, Sn, Sb und P, mit x derart, dass 0,1 ≤ x ≤ 2; wobei es sich versteht, dass, wenn x = 1 und E1 (beziehungsweise E2) Sn ist, E2 (beziehungsweise E1) dann von Sb unterschiedlich ist,
- wenn n≠ 0, dann ist x = 0, und E2 ist aus In, Bi, Ge, Sn, Sb und P ausgewählt, mit n derart, dass 0,1 ≤ n ≤ 3; wobei es sich versteht, dass, wenn n = 2 und M Cu ist, E2 dann von Sb unterschiedlich ist und wenn n = 6/5 und M Cu ist, E2 dann von Sn unterschiedlich ist,
(ii) 10 bis 25 % eines Bindemittels,
(iii) 15 bis 25 % eines Mittels, welches eine elektronische Konduktivität verleiht.

7. Negative Elektrode nach Anspruch 6, **dadurch gekennzeichnet, dass** sie umfasst:
(i) 60 bis 67 % eines aktiven Materials, das der folgenden Formel entspricht:
MₙE1ₓP (Ia)
wobei:
- M ein Übergangsmetall, ausgewählt aus Co, Cu, Ni und Fe, ist,
- E1 ein Element, ausgewählt aus In, Bi, Ge, Sn und Sb, ist,
- die Werte von n und x derart sind, dass die Verbindung der Formel (Ia) elektronisch neutral ist,
mit den folgenden Bedingungen:
- wenn n = 0 und x≠ 0, dann ist x derart, dass 0,1 ≤ x ≤ 1,
- wenn n≠ 0 und x = 0, dann ist n derart, dass 0,1 ≤ n ≤ 3,
(ii) 12 bis 20 % eines Bindemittels,
(iii) 18 bis 25 % eines Mittels, welches eine elektronische Konduktivität verleiht.

8. Negative Elektrode nach Anspruch 6 oder 7, **dadurch gekennzeichnet, dass** das Bindemittel aus der Carboxymethylcellulose (CMC), dem Polyvinylidenfluorid (PVDF), dem Styrol-Butadien-Copolymer (SBR) und ihren Gemischen ausgewählt ist.

9. Negative Elektrode nach einem der Ansprüche 6 bis 8, **dadurch gekennzeichnet, dass** das Mittel, welches eine elektronische Konduktivität verleiht, aus dem Carbonschwarz, den Dampfwachstum-Carbonfasern, den Carbon-Nanoröhrchen, dem SP-Carbon und ihren Gemischen ausgewählt ist.

## Claims

1. The use of a precursor compound for sodium alloy(s) fitting the following formula:
MₙE1ₓE2 (I)
wherein:
- M is a transition metal selected from among Co, Cu, Ni and Fe;
- E1 and E2 are elements selected from among In, Bi, Ge, Sn, Sb and P;
- the values of n and x are such that the compound of formula (1) is electronically neutral;
with the following conditions:
- when n = 0 and x ≠ 0, then E1 and E2 are different from each other and are selected from among In, Bi, Ge, Sn, Sb and P, with x such that 0.1 ≤ x ≤ 2; it being understood that when x = 1 and E1 (respectively E2) is Sn, E2 (respectively E1) is different from Sb;
- when n ≠ 0, then x = 0, and E2 is selected from among In, Bi, Ge, Sn, Sb and P, with n such that 0.1 ≤ n ≤ 3, it being understood that when n = 2, and M is Cu, then E2 is different from Sb and when n = 6/5, and M is Cu, then E2 is different from Sn; as a negative electrode active material in a sodium-ion battery.

2. The use according to claim 1, **characterized in that** the precursor compound for sodium alloy(s) fits the following formula (Ia) :
MₙE1ₓP (Ia)
wherein:
- M is a transition metal selected from among Co, Cu, Ni and Fe;
- E1 is an element selected from among In, Bi, Ge, Sn and Sb;
- the values of n and x are such that the compound of formula (Ia) is electronically neutral;
with the following conditions:
- when n = 0 and x ≠ 0, then x is such that 0.1 ≤ x ≤ 1;
- when n ≠ 0 and x = 0, then n is such that 0.1 ≤ n ≤ 3.

3. The use according to claim 1, **characterized in that** the precursor compound for sodium alloy(s) fits the following formula (Ib) :
MₙE1ₓSb (Ib)
wherein:
- M is a transition metal selected from among Co, Cu, Ni and Fe;
- E1 is an element selected from among In, Bi, Ge, Sn and P;
- the values of n and x are such that the compound of formula (Ib) is electronically neutral;
with the following conditions:
- when n = 0 and x ≠ 0, then x is such that 0.1 ≤ x ≤ 1;
- when n ≠ 0 and x = 0, then n is such that 0.1 ≤ n ≤ 3.

4. The use according to claim 3, **characterized in that** the precursor compound for sodium alloy(s) fits the following formula (Ib-1):
BiₓSb (Ib-1)
wherein:
- the value of x is such that the compound of formula (Ib-1) is electronically neutral;
- x is such that 0.1 ≤ x ≤ 1;

5. The use according to claim 1, **characterized in that** the sodium alloys precursor is SnGe.

6. A negative electrode for a sodium-ion battery, **characterized in that** it comprises:
(i) 55% to 75% of an active material fitting the following formula:
MₙE1ₓE2 (I)
wherein:
- M is a transition metal selected from among Co, Cu, Ni and Fe;
- E1 and E2 are elements selected from among In, Bi, Ge, Sn, Sb and P;
- the values of n and x are such that the compound of formula (I) is electronically neutral;
with the following conditions:
- when n = 0 and x ≠ 0, then E1 and E2 are different from each other and are selected from among In, Bi, Ge, Sn, Sb and P, with x such that 0.1 ≤ x ≤ 2; it being understood that when x = 1 and E1 (respectively E2) is Sn, E2 (respectively E1) is different from Sb;
- when n ≠ 0, then x = 0, and E2 is selected from among In, Bi, Ge, Sn, Sb and P, with n such that 0.1 ≤ n ≤ 3, it being understood that when n = 2, and M is Cu, then E2 is different from Sb and when n = 6/5, and M is Cu, then E2 is different from Sn,
(ii) 10 to 25% of a binder,
(iii) 15 to 25% of an agent giving electron conductivity.

7. The negative electrode according to claim 6, **characterized in that** it comprises:
(i) 60 to 67% of an active material fitting the following formula:
MₙE1ₓP (Ia)
wherein:
- M is a transition metal selected from among Co, Cu, Ni and Fe;
- E1 is an element selected from among In, Bi, Ge, Sn and Sb;
- the values of n and x are such that the compound of formula (Ia) is electronically neutral;
with the following conditions:
- when n = 0 and x ≠ 0, then x is such that 0.1 ≤ x ≤ 1;
- when n ≠ 0 and x = 0, then n is such that 0.1 ≤ no 3,
(ii) 12 to 20% of a binder,
(iii) 18 to 25% of an agent giving electron conductivity.

8. The negative electrode according to claim 6 or 7, **characterized in that** the binder is selected from among carboxymethyl cellulose (CMC), polyvinylidene fluoride (PVDF), styrene and butadiene copolymer (SBR) and mixtures thereof.

9. The negative electrode according to any of claims 6 to 8, **characterized in that** the agent giving electron conductivity is selected from among carbon black, steam-growth carbon fibers, carbon nanotubes, carbon SP and mixtures thereof.
